# EUROPÄISCHE PATENTSCHRIFT

(11) **EP 2 152 386 B1**
(45) Veröffentlichungstag und Bekanntmachung des Hinweises auf die Patenterteilung: **06.07.2011**
(21) Anmeldenummer: 08750224.1
(22) Anmeldetag: 09.05.2008
(51) Int. Cl.: B01D 46/52, F16J 15/02

(54) **KOMPAKTFILTERELEMENT**
COMPACT FILTER ELEMENT
ÉLÉMENT FILTRANT COMPACT

(30) Priorität: 11.05.2007 DE 202007006962 U
(43) Veröffentlichungstag der Anmeldung: 17.02.2010
(73) Patentinhaber: Mann + Hummel GmbH, 71638 Ludwigsburg (DE)
(72) Erfinder: AMESÖDER, Dieter, 74321 Bietigheim-Bissingen (DE); SIEBER, Thomas, 84163 Marklkofen/Warth (DE)
(74) Vertreter: Voth, Gerhard
(86) Internationale Anmeldenummer: PCT/EP2008/055733
(87) Internationale Veröffentlichungsnummer: WO 2008/138879

(56) Entgegenhaltungen:
- EP-A- 1 369 162
- EP-A- 1 457 247
- EP-A- 1 736 227
- DE-A1- 3 908 828
- DE-A1-102004 049 403
- US-A1- 2006 091 061

## Beschreibung

### Technisches Gebiet

Die Erfindung betrifft ein Kompaktfilterelement insbesondere eines Luftfilters für Kraftfahrzeuge mit den Merkmalen nach dem Oberbegriff des Anspruchs 1.

### Stand der Technik

Aus der EP 1 457 247 A1 ist ein hohlzylindrischer Filtereinsatz mit einer konzentrischen, radial wirkenden Dichtung bekannt.

Aus der DE 10 2004 049 403 A1 ist ein axial durchströmtes Filterelement mit einem am Umfang angeordneten Befestigungsring bekannt.

Aus der EP 1 369 162 A1 ist ein Abschlusselement für einen Filtereinsatz mit einem integral verbundenen Dichtelement bekannt.

Aus der EP 1 159 052 B1 ist ein gattungsgemäßes Kompaktfilterelement bekannt, welches zum austauschbaren Einsatz in einem Filtergehäuse vorgesehen ist. Das Kompaktfilterelement umfasst einen Filterkörper sowie eine im Bereich eines stirnseitigen Endes des Filterkörpers angeordnete Dichtung mit einem Dichtabschnitt. Der Dichtabschnitt ist in einer Breitenrichtung zur dichtenden Anlage an einer Gehäusewand des Filtergehäuses vorgesehen. Der Dichtabschnitt steht in Richtung der Längsachse über eine Stirnfläche des Filterkörpers hervor. Auf diese Weise benötigt die Dichtung gegenüber dem Filterkörper keinen zusätzlichen Bauraum in der Radial- bzw. Breitenrichtung. Unter Beibehaltung der kompakten Bauform kann nahezu der gesamte Querschnitt des Filtergehäuses mittels des Filterelementes ausgefüllt und dadurch zur Filtrierung genutzt werden.

Die über die Stirnfläche hervorstehende Anordnung des Dichtabschnittes unterliegt im eingebauten Zustand Kräften, die aus der dichtenden Anlage der Dichtung an der Gehäusewand folgen und in der Breitenrichtung nach innen zur Längsachse hin wirken. Zur Aufnahme dieser Kräfte ist ein umlaufender Rahmen vorgesehen, dessen freie umlaufende Kante von einem Dichtelement mit U-förmigem Querschnitt umschlossen ist. Der in Breitenrichtung äußere Teil des U-förmigen Querschnitts wirkt als Dichtung. Zusammen mit dem in Breitenrichtung inneren Querschnittsbereich wird die Befestigung am Stützrahmen erzielt. Der in Breitenrichtung innere Abschnitt des U-förmigen Dichtungsquerschnittes trägt nicht zur Dichtfunktion bei und verringert darüber hinaus den freien Strömungsquerschnitt des Kompaktfilterelementes. Fertigung und Montage sind aufwändig.

Der Erfindung liegt die Aufgabe zugrunde, ein gattungsgemäßes Kompaktfilterelement derart weiterzubilden, dass bei gegebenem Bauvolumen die Filtrierleistung verbessert und der Fertigungsaufwand verringert ist.

Diese Aufgabe wird durch ein Kompaktfilterelement mit den Merkmalen des Anspruchs 1 gelöst.

### Offenbarung der Erfindung

Es wird ein Kompaktfilterelement vorgeschlagen, bei dem der Dichtabschnitt eine umlaufende Stützwand und mindestens eine in der Breitenrichtung außenseitig und materialeinheitlich an der Stützwand angeformte Dichtlippe aufweist, wobei die Stützwand und die Dichtlippe aus einem gummielastischen Material bestehen. Die Erfindung basiert auf der Erkenntnis, dass der Dichtabschnitt insgesamt, trotz seiner in Richtung der Längsachse überkragenden Bauweise, aus einem nachgiebigen Material gefertigt werden kann, ohne in der Breitenrichtung die zur Erzielung der gewünschten Dichtwirkung notwendige Andruckkraft an die Gehäusewand zu verlieren. Die umlaufende Stützwand erzeugt trotz ihrer Ausführung aus gummielastischem Material eine hinreichende Stützwirkung gepaart mit einer für die Erzielung der Dichtwirkung erforderlichen Nachgiebigkeit. Die außenseitig angeformte Dichtlippe erzeugt eine gute Dichtwirkung, ohne zu hohe Andruckkräfte in der Breitenrichtung zu erzeugen. Durch die materialeinheitliche Ausgestaltung kann auf in der Breitenrichtung innenliegende Befestigungsmittel verzichtet werden. Der freie Strömungsquerschnitt ist durch den erfindungsgemäß ausgestalteten Dichtabschnitt nicht oder nur unwesentlich beeinträchtigt. Fertigungsaufwand und -kosten sind verringert.

In vorteilhafter Weiterbildung sind insgesamt drei umlaufende Dichtlippen am Dichtabschnitt angeordnet. Sie ergänzen sich gegenseitig in ihrer Dichtwirkung, so dass die einzelnen Dichtlippen entsprechend nachgiebig ausgestaltet sein können. Die dichtende Anpresskraft verteilt sich gleichmäßig auf die Stützwand, in dessen Folge deren elastische Verformung trotz ihres gummielastischen Materials gering ist.

Die mindestens eine Dichtlippe ist zweckmäßig entgegen einer Montagerichtung des Kompaktfilterelementes geneigt. Dies erleichtert das Einfädeln in ein zugeordnetes Gehäuseteil. Insbesondere in Verbindung mit einer Ausgestaltung, bei der das stirnseitige Ende des Filterkörpers mit der Dichtung einer Reinseite des Filterkörpers zugeordnet ist, ist die Dichtwirkung weiter verbessert: Die im Betrieb entstehende Druckdifferenz zwischen Rein- und Rohseite führt dazu, dass die geneigten Dichtlippen infolge der anliegenden Druckdifferenz an die Gehäusewand des Filtergehäuses angedrückt werden.

In einer bevorzugten Ausführung weist die Stützwand auf ihrer Innenfläche Aussteifungsrippen auf, deren jeweilige Ebene parallel zur Längsachse des Kompaktfilterelements liegt. Die materialbedingte Nachgiebigkeit der Stützwand wird zur Sicherstellung der dichtenden Anpresskraft verringert, ohne den freien Strömungsquerschnitt des Kompaktfilterelementes signifikant zu beeinträchtigen.

Zur Erzeugung der gewünschten Stützwirkung kann es ausreichen, dass die Aussteifungsrippen frei über die Innenfläche der Stützwand hervorstehen. Allein hierdurch wird die Biegesteifigkeit der Stützwand bezogen auf ihren Querschnitt signifikant erhöht. In zweckmäßiger Weiterbildung stehen die Aussteifungsrippen zusätzlich auf der Stirnfläche des Filterkörpers auf. Hierdurch wird ihre Stützwirkung weiter verbessert. Die Tendenz der Stützwand, bei Belastung in Breitenrichtung nach innen zu kippen, wird gemindert. Darüber hinaus wirken die Aussteifungsrippen als Montagehilfe. Bei der Montage der Dichtung auf den Filterkörper wirken die auf der Stirnfläche aufstehenden Aussteifungsrippen als Anschlag.

Es kann zweckmäßig sein, die Aussteifungsrippen als separate Einzelteile auszubilden. In bevorzugter Ausführung sind die Aussteifungsrippen materialeinheitlich an der Stützwand angeformt. Bei verringertem Fertigungsaufwand ist eine hinreichende Steifigkeit erzielbar. Darüber hinaus vermeidet die gummielastische Ausführung der Aussteifungsrippen eine lokale Überlastung des druckempfindlichen Filterkörpers.

In vorteilhafter Weiterbildung weist die Dichtung einen materialeinheitlichen mit dem Dichtabschnitt ausgeformten Befestigungsabschnitt auf, mit dem die Dichtung an einer Außenfläche des Filterkörpers befestigt ist, wobei mindestens eine in der Breitenrichtung außenseitig und materialeinheitlich an dem Befestigungsabschnitt angeformte weitere Dichtlippe vorgesehen ist. Insgesamt ist mit nur einem Arbeitsgang eine einteilige und materialeinheitliche Dichtung gebildet, die sämtliche Befestigungs- und Dichtfunktionen in sich vereint. Die zusätzlich angeformte weitere Dichtlippe dient der Zentrierung des Filterkörpers im Filtergehäuse. Bei einer zweiteiligen Ausgestaltung des Filtergehäuses erzeugt die zusätzliche Dichtlippe eine Abdichtung beispielsweise gegenüber dem Gehäusegrundkörper, während die eingangs beschriebenen Dichtlippen eine Abdichtung gegenüber dem Gehäusedeckel herbeiführen. Auf eine aufwändige Abdichtung des Gehäusedeckels gegenüber dem Gehäusegrundkörper kann verzichtet werden.

### Kurze Beschreibung der Zeichnungen

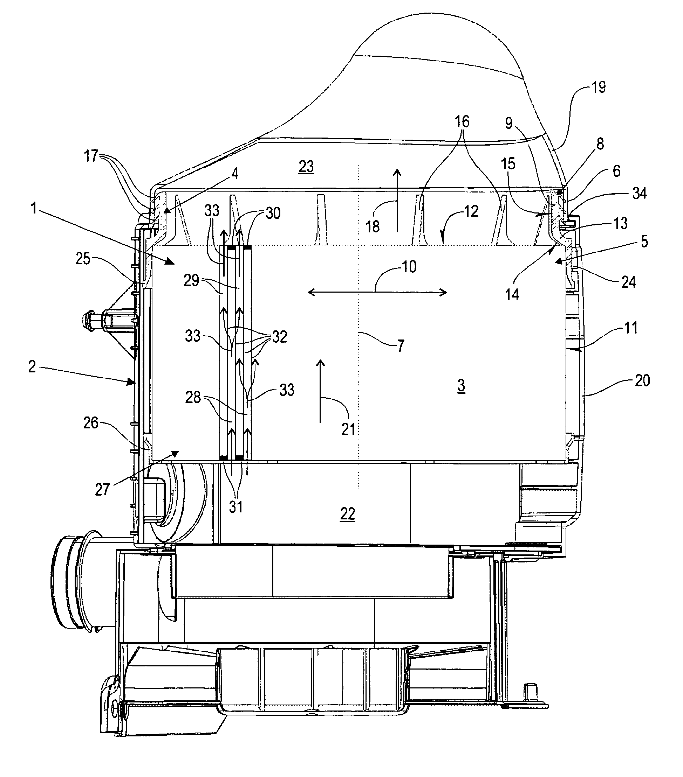

Ein Ausführungsbeispiel der Erfindung ist nachfolgend anhand der Zeichnung näher beschrieben. Die einzige Figur zeigt in einer Längsschnittdarstellung einen Luftfilter mit einem erfindungsgemäß ausgeführten Kompaktluftfilterelement und stirnseitig angeordneter Dichtung.

### Ausführungsform der Erfindung

Die einzige Figur zeigt eine Längsschnittdarstellung durch einen Luftfilter für Kraftfahrzeuge mit einem erfindungsgemäß ausgeführten Kompaktfilterelement 1. Anstelle des beispielhaft dargestellten Kraftfahrzeug-Ansaugluftfilters kann ein derartiger Luftfilter auch für andere Anwendungen zweckmäßig sein.

Das Kompaktfilterelement 1 weist einen aus Filterpapier bestehenden, gewickelten Filterkörper 3 auf. Auf eine glatte Filterpapierbahn ist eine gewellte Filterpapierbahn aufgebracht, die zur Bildung des Filterkörpers 3 gemeinsam zu einem Wickelkörper aufgewickelt sind. Durch die dabei entstehende abwechselnde Schichtung einer glatten und einer gewellten Filterpapierbahn sind Gaskanäle 28, 29 gebildet. Abwechselnd nebeneinander sind eingangsseitige Gaskanäle 28 und ausgangsseitige Gaskanäle 29 mit Stopfen 30, 31 verschlossen. Das Kompaktfilterelement 1 weist eine Rohseite 22 und eine Reinseite 23 auf. Die eingangsseitigen Gaskanäle 28 sind an ihrem der Reinseite 23 zugeordneten Ende mit den Stopfen 30 verschlossen, während die ausgangsseitigen Gaskanäle 29 an ihren der Rohseite 22 zugeordneten Enden mit den Stopfen 31 verschlossen sind.

Im Betrieb ist das Kompaktfilterelement 1 in einem Filtergehäuse 2 eingebaut und wird von der Rohseite 22 zur Reinseite 23 hin in einer Durchströmungsrichtung 21 parallel zu einer Längsachse 7 des Kompaktfilterelementes 1 durchströmt. Entsprechend Pfeilen 33 strömt das zu filtrierende Gas von der Rohseite 22 in die eingangsseitigen Gaskanäle 28 ein. Infolge der Aufstauwirkung der Stopfen 30 tritt der Gasstrom durch aus dem Filterpapier gebildete Filterwände 32 der Gaskanäle 28, 29 hindurch und in die ausgangsseitigen Gaskanäle 29 hinein. Der hierbei filtrierte Gasstrom strömt durch die ausgangseitigen Gaskanäle 29 in der Durchströmungsrichtung 21 zur Reinseite 23 hin aus.

Anstelle des vorstehend beschriebenen Wickelkörpers kann auch ein Filterkörper 3 aus honigwabenartig expandierten Schichten von Filterpapier gebildet sein. Anstelle der Stopfen 30, 31 kann es auch zweckmäßig sein, die Gaskanäle 28, 29 durch Zusammenquetschen des Filterpapiers zu verschließen.

Das Kompaktfilterelement 1 ist zum austauschbaren Einsatz in dem Filtergehäuse 2 vorgesehen. Hierzu umfasst das Filtergehäuse 2 einen Grundkörper 20 und einen lösbaren, unter Bildung einer Trennfuge 34 daran befestigten Deckel 19. Die Ebene der Trennfuge 34 liegt senkrecht zur Längsachse 7 des Kompaktfilterelementes 1 und des Gehäuses 2. Nach Lösen des Deckels 19 vom Grundkörper 20 kann das Kompaktfilterelement 1 entnommen und gegen ein neues ersetzt werden.

Bezogen auf die Längsachse 7 weist der Filterkörper 3 ein der Reinseite 23 zugeordnetes stirnseitiges Ende 5 und ein der Rohseite 22 zugeordnetes stirnseitiges Ende 27 auf. Im Bereich des stirnseitigen Endes 5 ist eine umlaufende Dichtung 4 am Filterkörper 3 angeordnet. Sie weist einen umlaufenden Befestigungsabschnitt 24 auf, mit dem die Dichtung an einer Außenfläche 11 des Filterkörpers 3 befestigt ist. Im gezeigten Ausführungsbeispiel ist dazu der Befestigungsabschnitt 24 mit der Außenfläche 11 verklebt. Es können aber auch andere Befestigungsmittel zweckmäßig sein. Am Befestigungsabschnitt 24 ist eine umlaufende Dichtlippe 25 angeformt, die aufgrund ihrer elastischen Eigenschaften in einer senkrecht zur Längsachse 7 liegenden Breitenrichtung 10 an einer Innenwand des Grundkörpers 20 umlaufend dichtend anliegt. Je nach Ausgestaltung der Innenwand des Grundkörpers 20 kann durch die Dichtlippe 25 auch eine Rastfunktion ausgeführt werden, mittels derer das Kompaktfilterelement 1 in seiner Relativlage zum Grundkörper 20 des Filtergehäuses 2 gehalten wird. An dem der Rohseite 22 zugeordneten stirnseitigen Ende 27 ist noch ein weiterer, um die Dichtfläche 11 umlaufender Dichtring 26 vorgesehen, der im montierten Zustand des Kompaktfilterelementes 1 in der Breitenrichtung 10 an der Innenfläche des Grundkörpers 20 des Filtergehäuses 2 anliegt.

Mit Ausnahme des Befestigungsabschnittes 24 stehen die weiteren Querschnittsbereiche der umlaufenden Dichtung 4 in Richtung der Längsachse 7 über eine Stirnfläche 12 des Filterkörpers 3 zur Reinseite 23 hin hervor. Zu den über die Stirnfläche 12 hervorstehenden Abschnitten gehört ein Übergangsabschnitt 13 und ein Dichtabschnitt 8. Der Dichtabschnitt 8 weist eine umlaufende Stützwand 9 auf, die gegenüber dem Befestigungsabschnitt 24 in der Breitenrichtung 10 nach innen zur Längsachse 7 hin zurückversetzt angeordnet ist. Dabei liegt der im Wesentlichen rechteckige Querschnitt der Stützwand 9 im Wesentlichen parallel zur Längsachse 7. Der Befestigungsabschnitt 24 geht mittels des schräg nach innen zur Längsachse 7 hin geneigten Übergangsabschnittes 13 in die Stützwand 9 über. Eine umlaufende Innenfläche 15 der Stützwand 9 liegt parallel bzw. koaxial zur Längsachse 7. Eine Innenfläche 14 des Übergangsabschnittes 13 verengt sich etwa konisch ausgehend von der Außenfläche 11 des Filterkörpers 3 schräg nach innen zur Längsachse 7 hin, bis sie an die Innenfläche 15 der Stützwand 9 anschließt. Der Verlauf der Innenflächen 14, 15 stellt eine saubere Strömungsführung des aus dem Filterkörper 3 auch im äußeren Randbereich ausströmenden Gases sicher.

In der Breitenrichtung 10 ist außenseitig und materialeinheitlich an der Stützwand 9 mindestens eine Dichtlippe 17 angeformt. Im gezeigten Ausführungsbeispiel sind insgesamt drei umlaufende Dichtlippen 17 am Dichtabschnitt 8 angeordnet, die kaskadenartig in Richtung der Längsachse 7 zueinander beabstandet sind. Der Dichtabschnitt 8 liegt im montierten Zustand mit seinen Dichtlippen 17 in der Breitenrichtung 10 an einer Gehäusewand 6 des Filtergehäuses 2 an. Die Gehäusewand 6 kann dem Grundkörper 20 zugeordnet sein. Im gezeigten Ausführungsbeispiel ist die Gehäusewand 6 Teil des Deckels 19. Innenseitig an ihr liegen sämtliche drei Dichtlippen 17 dichtend an. In Verbindung mit der weiteren Dichtlippe 25 ist eine Abdichtung des Kompaktfilterelementes 1 sowohl gegenüber dem Grundkörper 20 als auch gegenüber dem Deckel 19 sichergestellt, so dass auf eine zusätzliche Dichtung zwischen beiden Gehäuseteilen im Bereich ihrer Trennfuge 34 verzichtet werden kann.

Bezogen auf dasjenige Gehäuseteil mit der den Dichtlippen 17 zugeordneten Gehäusewand 6 ist eine Montagerichtung des Kompaktfilterelementes 1 durch einen Pfeil 18 angegeben. Beim Aufsetzen des Deckels 19 auf den Grundkörper 20 mit dem darin eingesetzten Kompaktfilterelement 1 schiebt sich der Dichtabschnitt 8 in der Montagerichtung 18 in den Deckel 19 hinein. Die Dichtlippen 17 sind entgegen der Montagerichtung 18 geneigt. Im entspannten Zustand stehen ihre äußeren Kanten in der Breitenrichtung 10 über die Gehäusewand 6 hervor. Beim Aufschieben des Deckels 19 wird die Neigung der Dichtlippen 17 vergrößert, wobei sich eine elastische Vorspannkraft in der Breitenrichtung 10 zur Anlage an der Gehäusewand 6 aufbaut. Im Betrieb des gezeigten Filters entsteht eine Druckdifferenz zwischen der Rohseite 22 und der Reinseite 23, demnach auf der Rohseite 22 ein geringerer Druck als auf der Reinseite 23 herrscht. Diese Differenz kann unterstützend auf die Anpresskraft der schräggeneigten Dichtlippen 17 wirken.

Die Stützwand 9 ist auf ihrer Innenfläche 15 mit angeformten Aussteifungsrippen 16 versehen. Die flächigen, ebenen Aussteifungsrippen 16 erstrecken sich in der Breitenrichtung 10 und parallel zur Längsachse 7, demnach ihre jeweilige Ebene parallel zur Längsachse 7 liegt. Hierdurch lassen sie eine ungestörte Abströmung des durch den Filterkörper 3 hindurchtretenden Gases zu. Gleichzeitig erhöhen sie die Biegesteifigkeit des Querschnittes der Stützwand 9. Als zusätzliche vorteilhafte Option ist dargestellt, dass die Aussteifungsrippen 16 auf der Stirnseite 12 des Filterkörpers 3 aufstehen.

Die Dichtung 4 ist insgesamt einschließlich des Dichtabschnittes 8 mit der Stützwand 9, den Dichtlippen 17 und den Aussteifungsrippen 16, des Übergangsabschnittes 13 und des Befestigungsabschnittes 24 mit der weiteren Dichtlippe 25 einteilig und materialeinheitlich aus einem gummielastischen Material gefertigt.

## Patentansprüche

1. Kompaktfilterelement (1) zum austauschbaren Einsatz in einem Filtergehäuse (2), umfassend einen Filterkörper (3) mit einer Längsachse (7), sowie mindestens eine im Bereich eines stirnseitigen Endes (5) des Filterkörpers (3) angeordnete Dichtung (4) mit einem Dichtabschnitt (8), der in einer Breitenrichtung (10) zur dichtenden Anlage an einer Gehäusewand (6) des Filtergehäuses (2) vorgesehen ist, wobei der Dichtabschnitt (8) in Richtung der Längsachse (7) über eine Stirnfläche (12) des Filterkörpers (3) hervorsteht, **dadurch gekennzeichnet, dass** der Dichtabschnitt (8) eine umlaufende Stützwand (9) und mindestens eine in der Breitenrichtung (10) außenseitig und materialeinheitlich an der Stützwand (9) angeformte Dichtlippe (17) aufweist, wobei die Stützwand (9) und die Dichtlippe (17) aus einem gummielastischen Material bestehen, wobei die Stützwand (9) auf ihrer Innenfläche (15) Aussteifungsrippen (16) aufweist, deren jeweilige Ebene parallel zur Längsachse (7) liegt, wobei die Aussteifungsrippen (16) auf der Stirnfläche (12) des Filterkörpers (3) aufstehen, und wobei die Aussteifungsrippen (16) materialeinheitlich an der Stützwand (9) angeformt sind.

2. Kompaktfilterelement nach Anspruch 1, **dadurch gekennzeichnet, dass** insgesamt drei umlaufende Dichtlippen (17) am Dichtabschnitt (8) angeordnet sind.

3. Kompaktfilterelement nach Anspruch 1 oder 2, **dadurch gekennzeichnet, dass** die Dichtlippe (17) entgegen einer Montagerichtung (18) des Kompaktfilterelementes (1) geneigt ist.

4. Kompaktfilterelement nach einem der Ansprüche 1 bis 3, **dadurch gekennzeichnet, dass** die Dichtung (4) einen materialeinheitlich mit dem Dichtabschnitt (8) ausgeformten Befestigungsabschnitt (24) aufweist, mit dem die Dichtung (4) an einer Außenfläche (11) des Filterkörpers (3) befestigt ist, wobei mindestens eine in der Breitenrichtung (10) außenseitig und materialeinheitlich an dem Befestigungsabschnitt (24) angeformte weitere Dichtlippe (17) vorgesehen ist.

5. Kompaktfilterelement nach einem der Ansprüche 1 bis 4, **dadurch gekennzeichnet, dass** das stirnseitige Ende (5) des Filterkörpers (3) mit der Dichtung (4) einer Reinseite (23) des Filterkörpers (3) zugeordnet ist.

## Claims

1. Compact filter element (1) for a replaceable insertion into a filter housing (2), comprising a filter body (3) with a longitudinal axis (7) as well as at least one sealing (4) disposed in the area of a front end (5) of the filter body (3) and equipped with a sealing section (8) which is provided in a widthwise direction (10) to be sealingly applied to a housing wall (6) of the filter housing (2), the sealing section (8) projecting beyond an end face (12) of the filter body (3) into the direction of the longitudinal axis (7), **characterized in that** the sealing section (8) features a circumferential supporting wall (9) and at least one sealing lip (17) integrally molded in widthwise direction (10) to the outside of the supporting wall (9) and made of the same material, the supporting wall (9) and the sealing lip (17) being made of a rubber-elastic material, the supporting wall (9) featuring at its inner surface (15) stiffening ribs (16) their respective plane being parallel to the longitudinal axis (7), the stiffening ribs (16) being placed vertically on the end face (12) of the filter body (3), and the stiffening ribs (16) being integrally molded to the supporting wall (9) and being of the same material.

2. Compact filter element according to claim 1, **characterized in that** altogether three circumferential sealing lips (17) are disposed at the sealing section (8).

3. Compact filter element according to claim 1 or 2, **characterized in that** the sealing lip (17) is inclined opposite to a mounting direction (18) of the compact filter element (1).

4. Compact filter element according to one of the claims 1 to 3, **characterized in that** the sealing (4) features a fixing portion (24) molded with the sealing section (8) and made of the same material that fixes the sealing (4) at an outside surface (11) of the filter body (3), at least one more sealing lip (17) being provided in widthwise direction (10) integrally molded at the outside of the fixing portion (24) and made of the same material

5. Compact filter element according to one of the claims 1 to 4, **characterized in that** the front end (5) of the filter body (3) is allocated with the sealing (4) to a clean side (23) of the filter body (3).

## Revendications

1. Elément de filtre compact (1) destiné à une utilisation échangeable dans un boîtier de filtre (2), comprenant un corps de filtre (3) avec un axe longitudinal (7) et au moins un joint (4) disposé à proximité d'une extrémité frontale (5) du corps de filtre (3) et doté d'une section d'étanchéité (8) qui est prévue dans le sens de la largeur (10) en vue de générer un contact étanche avec une paroi (6) du boîtier de filtre (2), la section d'étanchéité (8) dépassant en direction de l'axe longitudinal (7) d'une face frontale (12) du corps de filtre (3), **caractérisé en ce que** la section d'étanchéité (8) présente une paroi d'appui circulaire (9) et au moins une lèvre d'étanchéité (17) formée à l'extérieur de la paroi d'appui (9), dans le sens de la largeur (10), et réalisée dans le même matériau, la paroi d'appui (9) et la lèvre d'étanchéité (17) étant constituées d'un matériau en gomme élastique, la paroi d'appui (9) étant pourvue sur sa surface intérieure (15) de rainures de renfort (16) dont le plan respectif est parallèle à l'axe longitudinal (7), les rainures de renfort (16) étant positionnées à la verticale sur la face frontale (12) du corps de filtre (3) et les rainures de renfort (16) étant formées sur la paroi d'appui (9) et réalisées dans le même matériau.

2. Elément de filtre compact selon la revendication 1, **caractérisé en ce que** trois lèvres d'étanchéité circulaires (17) sont disposées sur la section d'étanchéité (8).

3. Elément de filtre compact selon la revendication 1 ou 2, **caractérisé en ce que** la lèvre d'étanchéité (17) est inclinée dans le sens inverse à un sens de montage (18) de l'élément de filtre compact (1).

4. Elément de filtre compact selon l'une des revendications 1 à 3, **caractérisé en ce que** le joint (4) présente une section de fixation (24) formée avec la section d'étanchéité (8) et réalisée dans le même matériau avec laquelle le joint (4) est fixé à une surface extérieure (11) du corps de filtre (3), au moins une autre lèvre d'étanchéité (17) formée à l'extérieur sur la section de fixation (24), dans le sens de la largeur (10), et réalisée dans le même matériau étant prévue.

5. Elément de filtre compact selon l'une des revendications 1 à 4, **caractérisé en ce que** l'extrémité frontale (5) du corps de filtre (3) est assignée au joint (4) d'un côté pur (23) du corps de filtre (3).
